# EUROPEAN PATENT SPECIFICATION

(11) **EP 2 113 357 B1**
(45) Date of publication and mention of the grant of the patent: **24.10.2012**
(21) Application number: 09003924.9
(22) Date of filing: 18.03.2009
(51) Int. Cl.: B29C 33/38, B29D 30/06

(54) **Mold for tire**
Form für Reifen
Moule pour pneu

(30) Priority: 02.05.2008 JP 2008120161
(43) Date of publication of application: 04.11.2009
(73) Proprietor: Sumitomo Rubber Industries, Ltd., Hyogo-ken (JP)
(72) Inventor: Shimizu, Keiji, Kobe-shi Hyogo 651-0072 (JP); Okano, Toru, Kobe-shi Hyogo 651-0072 (JP); Kinuhata, Satoru, Kobe-shi Hyogo 651-0072 (JP); Kanda, Masahiko, Kobe-shi Hyogo 651-0072 (JP)
(74) Representative: Manitz, Finsterwald & Partner GbR

(56) References cited:
- EP-A- 1 527 865
- DE-A1- 10 308 152
- JP-A- 2005 225 094
- JP-A- 2009 023 231
- US-A1- 2007 018 349

## Description

### BACKGROUND OF THE INVENTION

### Field of the Invention

The present invention relates to a mold to be used in a tire vulcanizing process. More particularly, the present invention relates to a mold having a slit for discharging air.

### Description of the Related Art

In a tire vulcanizing process, a mold is used. A two phase mold and a two piece mold can be used in the vulcanizing process. In the vulcanizing process, a preformed raw cover is put into the mold. The raw cover is pressurized and heated in a cavity surrounded by the mold and a bladder. By the pressurization and heating, a rubber composition of the raw cover flows in the cavity. A rubber causes a crosslinking reaction by the heating so that the tire is obtained. In the pressurization, when air remains between a cavity surface of the mold and the raw cover, a bare is formed on a surface of the tire. The bare deteriorates quality of the tire. A general mold has a vent hole. The air is discharged through the vent hole.

The two phase mold includes an arcuate tread segment. A large number of segments are arranged so that a ring-shaped cavity surface is formed. The segment is obtained by gravity casting or low pressure casting in which a die is used. In some cases, the segment is obtained by precision casting (so-called die casting) using a metal die.

A surface of a segment which abuts on an adjacent segment is referred to as a "divided surface". A very small gap is generated between the divided surface and another divided surface which is adjacent to the divided surface. Through the gap, air is discharged. By the discharge, a bare is prevented.

Japanese Laid-Open Patent Publication No. 2-295706, Japanese Laid-Open Patent Publication No. 2005-225094 and Japanese Laid-Open Patent Publication No. 2006-508833 have disclosed a mold for a tire which has a slit on a cavity surface. In the mold, air is discharged through the slit.

Japanese Laid-Open Patent Publication No. 2007-144997, Japanese Laid-Open Patent Publication No. 2007-237708 and Japanese Laid-Open Patent Publication No. 2008-87428 have disclosed a mold for a tire which has a first metal piece and a second metal piece. In the forming of the mold, a molten metal is caused to flow between two first metal pieces which are adjacent to each other. The metal coagulates so that the second metal piece is formed. In the mold, air is discharged through a slit between the first and second metal pieces.

In the mold having the vent hole, the rubber composition flows into the vent hole so that a spew is generated. The spew damages an appearance of the tire. Although the spew can be removed by cutting, a great deal of time and labor is required for the cutting operation. In some cases, the rubber composition causing a crosslinking reaction remains in the vent hole. The rubber composition remains so that the air is inhibited from being discharged and the bare is thus caused. In order to suppress the bare, cleaning for the vent hole is carried out. A great deal of time and labor is required for the cleaning.

In the mold in which the air is discharged through the gap between the divided surfaces, the air in the vicinity of the divided surface is discharged sufficiently. In a distant place from the divided surface, however, the bare is apt to be caused because the air remains.

The mold disclosed in each of the Japanese Laid-Open Patent Publication No. 2-295706, the Japanese Laid-Open Patent Publication No. 2005-225094 and the Japanese Laid-Open Patent Publication No. 2006-508833 has a complicated structure. In the mold, precision in a width of the slit is poor.

In the mold disclosed in each of the Japanese Laid-Open Patent Publication No. 2007-144997, the Japanese Laid-Open Patent Publication No. 2007-237708 and the Japanese Laid-Open Patent Publication No. 2008-87428, a flowing failure of the molten metal is apt to be caused. In the mold, a surface of the first metal piece is molten due to a contact with the molten metal in some cases. In the mold, precision in a width of the slit is poor.

A mold having the features of the preamble of claim 1 is known from JP2009-023231 and also from JP2005-225094.

It is an object of the present invention to provide a mold for a tire which causes a bare on the tire with difficulty and can easily be fabricated.

### SUMMARY OF THE INVENTION

This object is achieved with a mold having the features of claim 1. An inventive method of manufacturing a tire and an inventive method for manufacturing a mold for a tire are disclosed in claims 4 and 5, respectively. Subclaims are directed to preferable embodiments.

A mold for a tire according to the present invention includes a block having an internal surface forming a cavity surface. The block has a base and a core subjected to enveloped casting by the base. The core includes a plurality of plate-shaped pieces which is arranged and a shim interposed between two adjacent pieces. A slit is formed between the two adjacent pieces by the shim.

In the mold, air is discharged through the slit. By the discharge, a bare is suppressed. A structure of the mold is not complicated. In the mold, precision in a width of the slit is high.

It is preferable that each piece should have a hole. A plurality of pieces is fastened by a bar member penetrating through the hole. It is preferable that a coefficient of thermal expansion of the bar member should be smaller than that of the piece.

### BRIEF DESCRIPTION OF THE DRAWINGS

Fig. 1 is a plan view showing a part of a mold for a tire according to an embodiment of the present invention,
Fig. 2 is an enlarged sectional view taken along an II - II line in Fig. 1,
Fig. 3 is a perspective view showing a segment of the mold in Fig. 1,
Fig. 4 is an enlarged sectional view showing a part of a block of the segment in Fig. 3,
Fig. 5 is a perspective view showing a shim of the block in Fig. 4,
Fig. 6 is a perspective view showing a piece to be used for the block in Fig. 4,
Fig. 7 is a perspective view showing a core to be used for the block in Fig. 4,
Fig. 8 is a sectional view taken along a VIII line in Fig. 7,
Fig. 9 is a sectional view taken along an IX line in Fig. 7,
Fig. 10 is a sectional view showing a state in which the block in Fig. 4 has not been cut yet,
Fig. 11 is an enlarged sectional view showing a part of the block in Fig. 4,
Fig. 12 is a plan view showing a mold for a tire according to another embodiment of the present invention,
Fig. 13 is an enlarged perspective view showing a block of the mold in Fig. 12, and
Fig. 14 is an enlarged sectional view showing a part of the block in Fig. 13.

### DESCRIPTION OF THE PREFERRED EMBODIMENTS

The present invention will be described below in detail based on a preferred embodiment with reference to the drawings.

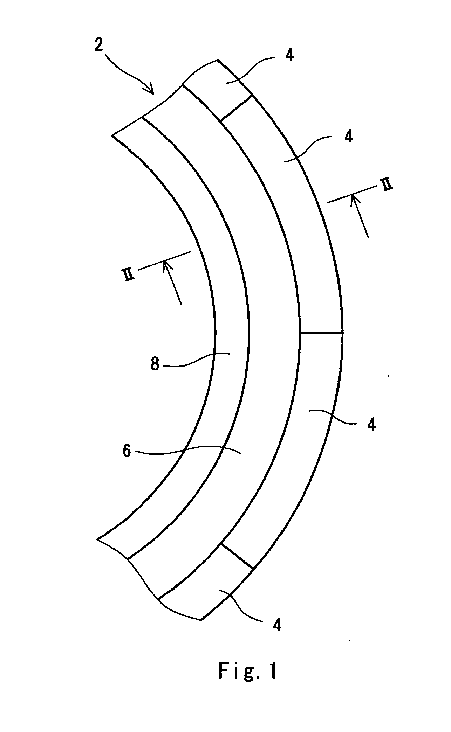

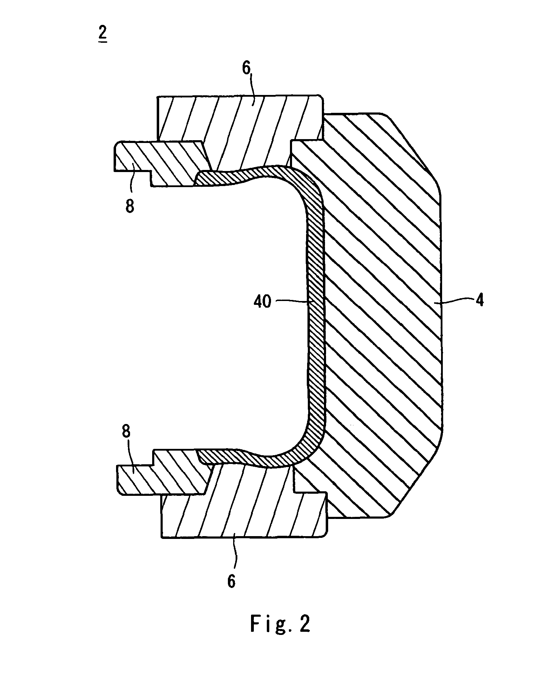

A mold 2 shown in Figs. 1 and 2 includes a large number of tread segments 4, a pair of side plates 6 and a pair of bead rings 8. A planar shape of the segment 4 is a substantially circular arc. A large number of segments 4 are disposed like a ring. The number of the segments 4 is usually equal to or greater than three and equal to or smaller than twenty. The side plate 6 and the bead ring 8 are substantially ring-shaped respectively. The mold 2 is a so-called "two phase mold".

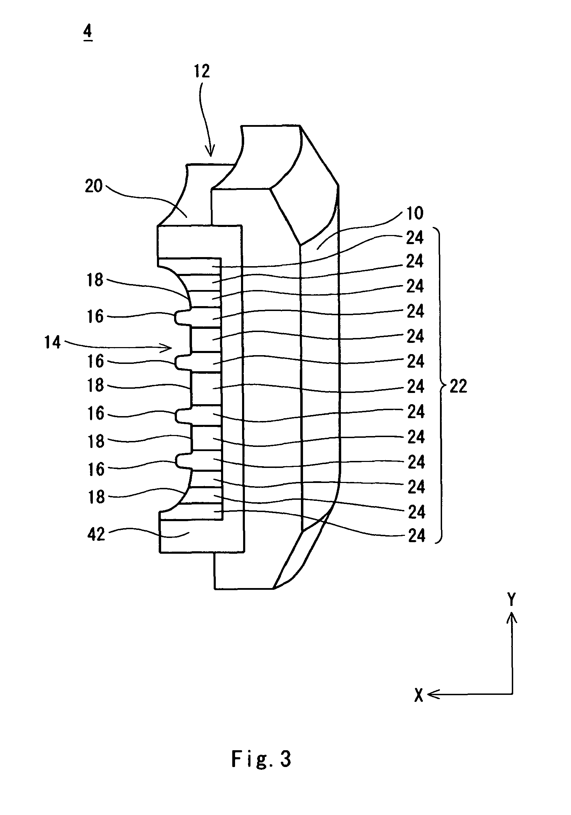

Fig. 3 is a perspective view showing the segment 4 of the mold 2 in Fig. 1. In Fig. 3, an X direction indicates a radial direction and a Y direction indicates an axial direction. A circumferential direction is orthogonal to the X and Y directions. The segment 4 is constituted by a holder 10 and a block 12. The holder 10 is formed of steel or an aluminum alloy. The block 12 is attached to the holder 10. A plurality of blocks 12 arranged in the circumferential direction may be attached to the holder 10.

The block 12 includes a cavity surface 14. The cavity surface 14 includes a protruded portion 16 and a recess portion 18. The protruded portion 16 corresponds to a groove of a tread of a tire. By the protruded portion 16 and the recess portion 18, a tread pattern is formed on the tire. Shapes of the protruded portion 16 and the recess portion 18 are properly determined corresponding to the tread pattern. In Fig. 2, the protruded portion 16 and the recess portion 18 are not shown.

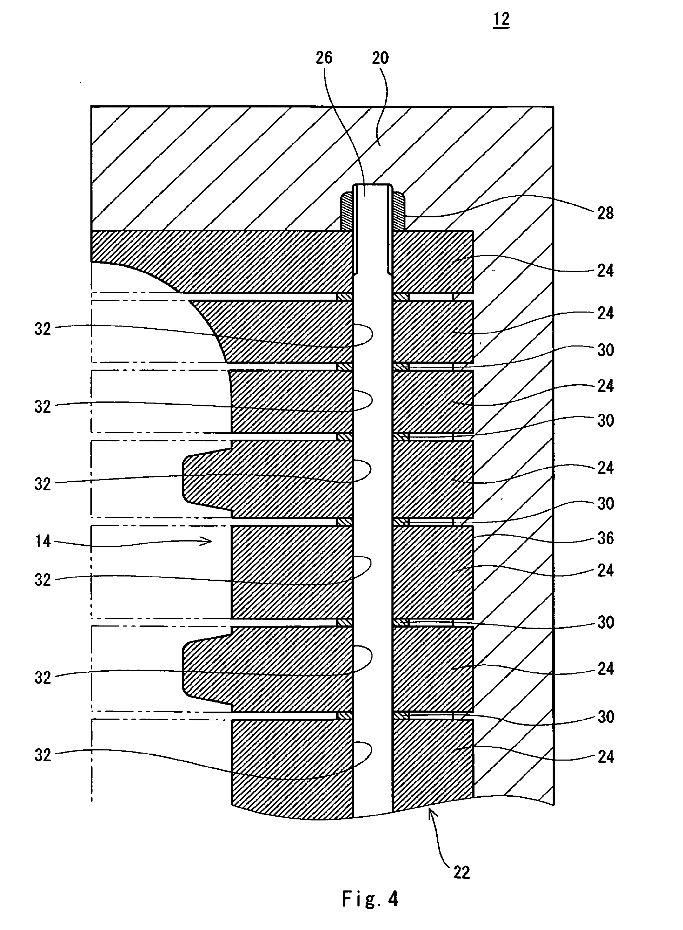

Fig. 4 is an enlarged sectional view showing a part of the block 12 in the segment 4 of Fig. 3. The block 12 is constituted by a base 20 and a core 22. The base 20 surrounds the core 22. The base 20 is formed by a metallic material. A typical metallic material is an aluminum alloy. The core 22 is constituted by a piece 24, a bolt 26 (a bar member), a nut 28 and a shim 30. In the present embodiment, the core 22 includes thirteen pieces 24 (see Fig. 3). The number of the pieces is properly determined.

The piece 24 is plate-shaped. The piece 24 is formed by a metallic material. A typical metallic material is an aluminum alloy. The piece 24 has a hole 32. The bolt 26 penetrates through the hole 32. The bolt 26 is formed by a metallic material. A metallic material having a smaller coefficient of thermal expansion than a coefficient of thermal expansion of the metallic material of the piece 24 is suitable for the bolt 26. A male screw is formed on each of upper and lower ends of the bolt 26. The male screw is engaged into the nut 28. By fastening the nut 28, the thirteen pieces 24 are bound. The end of the bolt 26 and the nut 28 are buried in the base 20.

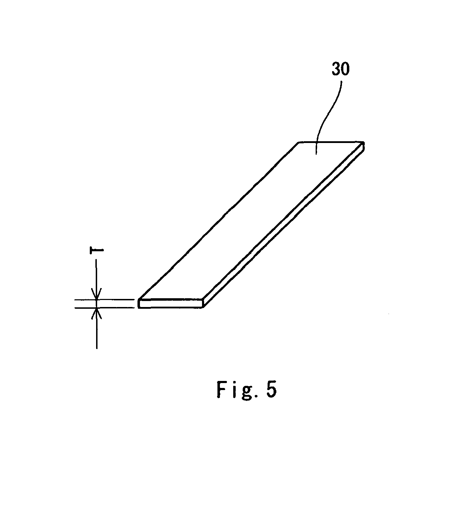

Fig. 5 is a perspective view showing the shim 30 of the block 12 in Fig. 4. The shim 30 is formed by a metallic material. A typical metallic material is stainless steel. The shim 30 takes a shape of a thin plate. A planar shape of the shim 30 is substantially rectangular. The rectangular shim 30 can be fabricated easily. An arrow T in Fig. 5 indicates a thickness of the shim 30. As shown in Fig. 4, the shim 30 is interposed between two pieces 24 which are adjacent to each other. The nut 28 is fastened so that the piece 24 presses the shim 30. By the shim 30, a slit is formed between the two pieces 24 which are adjacent to each other. The slit is extended in radial and circumferential directions. The slit reaches the cavity surface 14. In the present embodiment, the core 22 includes twelve shims 30.

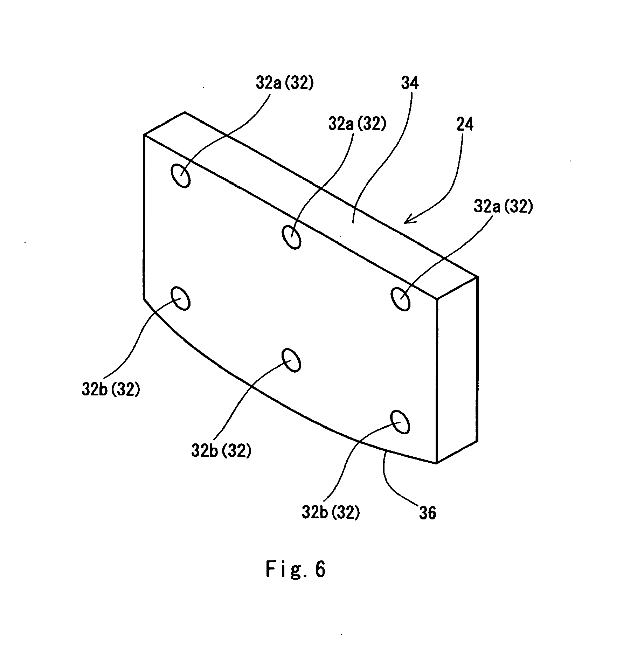

For the fabrication of the block 12, the piece 24 is prepared. Fig. 6 is a perspective view showing the piece 24. The piece 24 is plate-shaped. The piece 24 has a front face 34 and a back face 36. The back face 36 takes a shape of a circular arc. The piece 24 has six holes 32. Three holes 32a are positioned on the front face 34 side and three holes 32b are positioned on the back face 36 side. The number of the holes 32 is properly determined. It is preferable that the number of the holes 32 should be equal to or greater than four and be equal to or smaller than twenty.

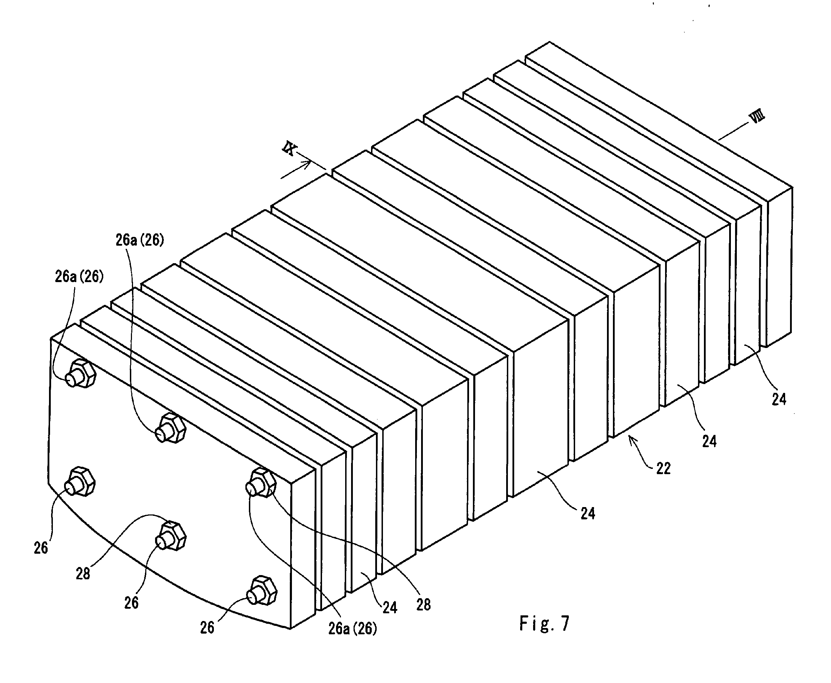

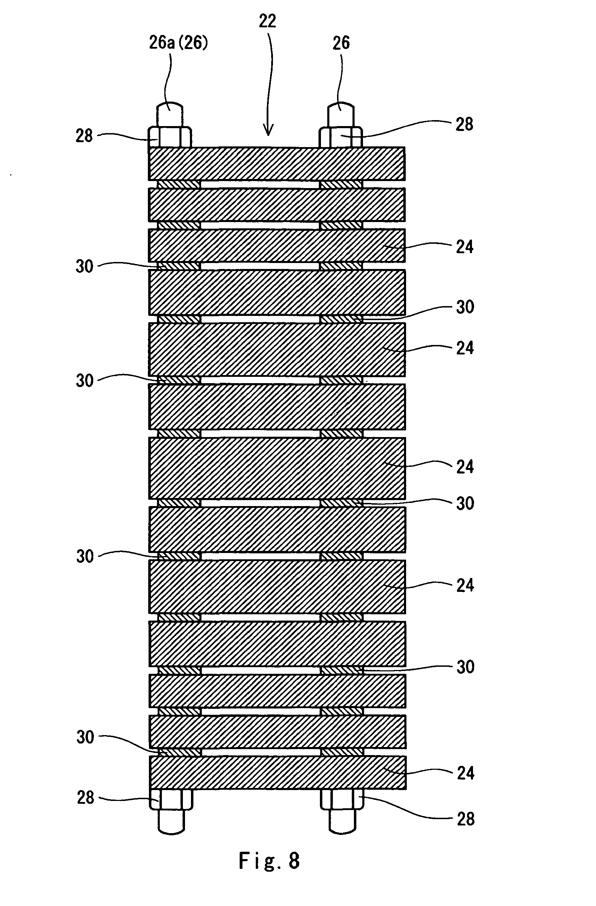

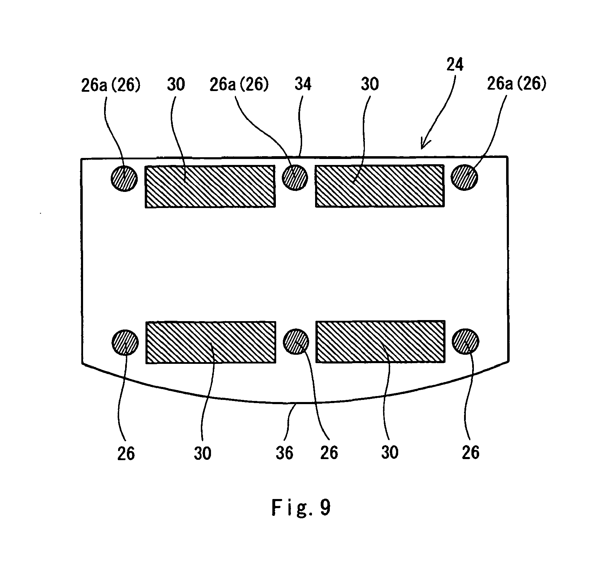

A large number of pieces 24 are laminated so that the core 22 is obtained. Fig. 7 is a perspective view showing the core 22. Fig. 8 is a sectional view taken along a VIII line in Fig. 7. Fig. 9 is a sectional view taken along an IX line in Fig. 7. In the lamination, the shim 30 is disposed between the pieces 24 and 24. By the shim 30, a slit is formed on the core 22. The piece 24 and the shim 30 are integrated by the bolt 26 and the nut 28. As is apparent from Fig. 9, the shim 30 is disposed to keep away from the bolt 26. In other words, the bolt 26 does not penetrate through the shim 30. The shim 30 does not need to have a hole for the bolt 26. Therefore, the shim 30 can be fabricated easily. By fastening the nut 28, the piece 24 presses the shim 30. Therefore, the shim 30 can be prevented from slipping out of the piece 24. In respect of a prevention of the slip-off, it is preferable that a fastening force of the nut 28 should be equal to or greater than 2 N · m and be equal to or smaller than 7 N · m.

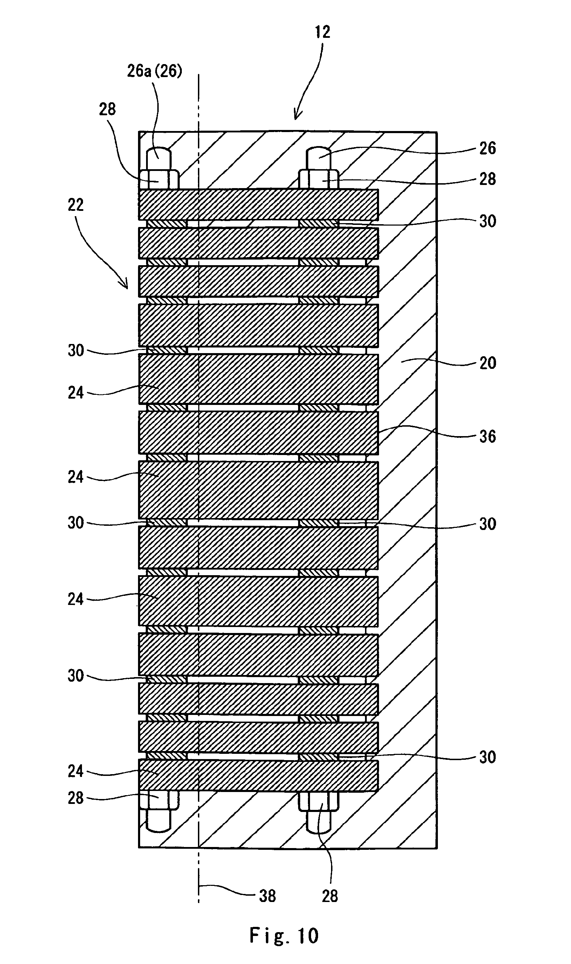

The core 22 is inserted into a die and a molten metal is caused to flow into a surrounding part of the core 22. A runner of the molten metal is devised so that the piece 24 can be prevented from being molten by the molten metal. The molten metal coagulates in the die. By the coagulation, the base 20 is formed. Thus, the block 12 having the base 20 and the core 22 is obtained. Fig. 10 is a sectional view showing the block 12. In the block 12, the base 20 covers back, upper and lower surfaces of the core 22. In other words, the core 22 is subjected to enveloped casting by the base 20. By the enveloped casting, the core 22 is firmly fixed to the base 20.

The block 12 is cut along a two-dotted chain line 38 in Fig. 10. A left part from the two-dotted chain line is discarded. Accordingly, three bolts 26a are also discarded. A cut surface on a right side (the side of back face 36) from the two-dotted chain line 38 is subjected to a cut processing. By the cut processing, the cavity surface 14 having a concavo-convex pattern (see Fig. 4) is formed. In Fig. 4, a contour of the piece 24 which has not been subjected to the cut processing is shown in a two-dotted chain line. The block 12 is attached to the holder 10 (see Fig. 3) so that the segment 4 is obtained.

By the method, a concavo-convex pattern is directly engraved. A typical cut processing is carried out by means of a tool. The cut processing may be carried out by a high energy density processing. Specific examples of the high energy density processing include an electrochemical processing, a discharge processing, a wire cut discharge processing, a laser processing and an electron beam processing. Since the concavo-convex pattern is directly engraved, a degree of freedom of a shape of the concavo-convex pattern is high. The concavo-convex pattern has high precision in a dimension.

In a method of manufacturing a tire using the mold 2, a raw cover 40 (an unvulcanized tire) is obtained by preforming. The raw cover 40 is put into the mold 2 in a state in which the mold 2 is opened and a bladder contracts. The mold 2 is fastened so that the bladder expands. The raw cover 40 is pressed against the cavity surface 14 of the mold 2 by the bladder and is thus pressurized. The raw cover 40 in this state is shown in Fig. 2. At the same time, the raw cover 40 is heated. By the pressurization and heating, the rubber composition flows. The rubber causes a crosslinking reaction by the heating so that the tire is obtained. A step of pressurizing and heating the raw cover 40 is referred to as a vulcanizing step. In place of the bladder, an insert core may be used.

As described above, the slit is exposed to the cavity surface 14. At the vulcanizing step, therefore, air between the raw cover 40 and the cavity surface 14 is moved through the slit. The air reaches a divided surface 42 (see Fig. 3) and is discharged. Air in a region provided apart from the divided surface 42 can be moved to the divided surface 42 through the slit. By the movement and discharge of the air, a bare is prevented. As described above, the core 22 is firmly fixed to the base 20. Therefore, precision in a dimension of the slit is high. By the slit, the air can be reliably discharged. In the mold 2, even if a vent hole is not provided, the air can be sufficiently discharged. By the mold 2 having no vent hole, a tire having no spew is obtained. The tire is excellent in an appearance and an initial gripping performance. It is also possible to provide a small number of vent holes together with the slit.

It is not necessary to always form the concavo-convex pattern on the cavity surface 14. By the mold 2 having no concavo-convex pattern, it is possible to obtain a slick tire or a plain tire. In the slick tire and the plain tire, similarly, the spew is suppressed. A surface of the plain tire is cut so that the concavo-convex pattern is formed. Since a small number of spews are formed, the plain tire can be cut easily.

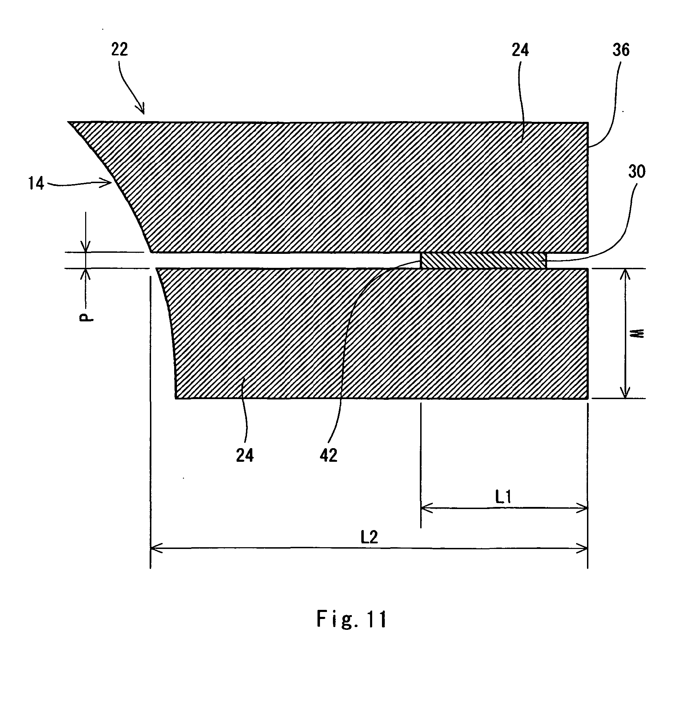

Fig. 11 is an enlarged sectional view showing a part of the block 12 in Fig. 4. In Fig. 11, an arrow L1 indicates a distance from the inner end 42 of the shim 30 to the back face 36 of the piece 24 and an arrow L2 indicates a distance from the cavity surface 14 to the back face 36. The distance L1 is sufficiently smaller than the distance L2. In other words, the shim 30 is positioned in the vicinity of the back face 36, and the cavity surface 14 and the inner end 42 of the shim 30 are provided apart from each other. The shim 30 does not inhibit the movement of the air through the slit. In respect of the movement of the air, a ratio (L1/L2) is preferably equal to or lower than 0.5 and is more preferably equal to or lower than 0.3. The ratio (L1/L2) is preferably equal to or higher than 0.1.

It is preferable that the number of the slits in the core 22 should be equal to or greater than five. In the core 22 having at least five slits, the air can be sufficiently discharged. From this viewpoint, it is more preferable that the number of the slits should be equal to or greater than ten. In order to easily fabricate the core 22, the number of the slits is preferably equal to or smaller than forty and is more preferably equal to or smaller than thirty. The segment 4 shown in Fig. 3 includes thirteen pieces 24 and twelve shims 30 as described above. Accordingly, the number of the slits is twelve.

In Fig. 11, an arrow P indicates a width of the slit in the cavity surface 14. It is preferable that the width P should be equal to or greater than 0.005 mm. By the slit having the width P of 0.005 mm or more, the air is sufficiently discharged. From this viewpoint, it is more preferable that the width P should be equal to or greater than 0.02 mm. It is preferable that the width P should be equal to or smaller than 0.09 mm. The rubber composition flows, with difficulty, into the slit having the width P which is equal to or smaller than 0.09 mm. Accordingly, a tire having an excellent appearance can be obtained. From this viewpoint, the width P is more preferably equal to or smaller than 0.07 mm and is particularly preferably equal to or smaller than 0.05 mm.

By fastening the nut 28, the piece 24 or the shim 30 is deformed more or less. By the deformation, the width P tends to be smaller than a thickness T of the shim 30 (see Fig. 5). Due to the fact that the shim 30 is positioned in the vicinity of the back face 36, similarly, the width P tends to be smaller than the thickness T. In order to achieve the proper width P, the thickness T is preferably equal to or greater than 0.02 mm and is more preferably equal to or greater than 0.03 mm. The thickness T is preferably equal to or smaller than 0.10 mm, is more preferably equal to or smaller than 0.08 mm and is particularly preferably equal to or smaller than 0.06 mm.

When the mold 2 is repetitively used, a deposit sticks to the cavity surface 14. The deposit deteriorates quality of the tire. It is necessary to remove the deposit. For the removal, usually, a shot blasting is employed. By the shot blasting, a corner of the piece 24 causes a minute plastic deformation. By the plastic deformation, a burr is generated so that the slit is clogged in some cases. A temperature of the mold 2 in which the clogging is caused is raised. By the rise in the temperature, the piece 24 expands. The bolt 26 is formed by a material having a small coefficient of thermal expansion. Therefore, the expansion of the bolt 26 with the rise in the temperature is small. Accordingly, the piece 24 expands in a state in which it is fastened by the bolt 26. By the expansion, the piece 24 presses the adjacent piece 24. By the pressing operation, the spew is broken so that the slit is reproduced. In order to cause the piece 24 to sufficiently expand, resulting in a reproduction of the slit, it is preferable that a width W of the piece 24 (see Fig. 11) should be equal to or greater than 5 mm. It is preferable that the width W should be equal to or smaller than 30 mm. In the piece 24 having the width W of 30 mm or less, a slit having an excessively great width P can be prevented from being generated by the rise in the temperature. The core 22 may include a plurality of pieces 24 having different widths W from each other and may include a plurality of pieces 24 having identical widths W to each other. When the width P of the slit is excessively great, the width P may be reduced by shot blasting.

The segment 4 of the mold is constituted by the holder 10, the base 20 and the core 22 as described above. The holder 10 may be omitted and the base 20 may also function as the holder 10.

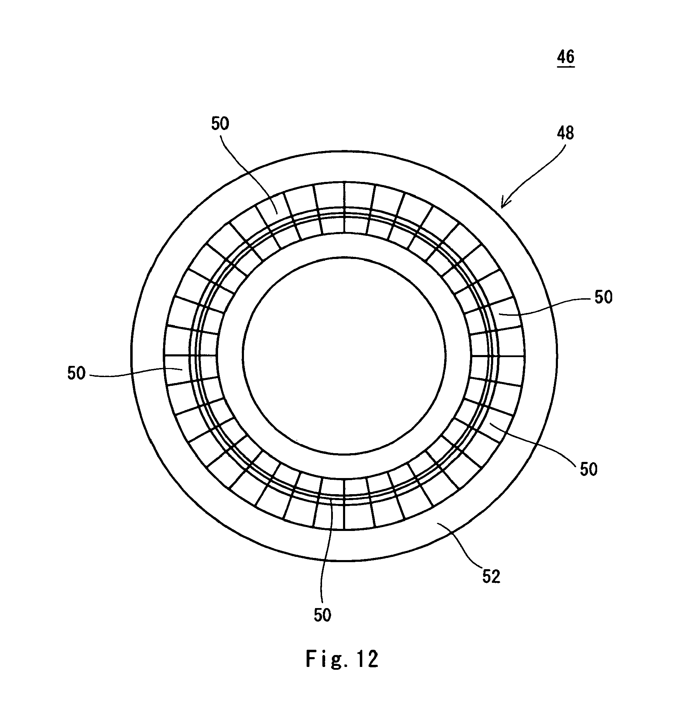

Fig. 12 is a plan view showing a mold 46 for a tire according to another embodiment of the present invention. The mold 46 is a so-called "two piece mold". The mold 46 has a lower mold half 48 and an upper mold half. Fig. 12 shows only the lower mold half 48. The upper mold half has a shape obtained by inverting a shape of the lower mold half 48. The mold 46 has a large number of blocks 50 and a shell 52. The block 50 is fixed to the shell 52. The block 50 takes a shape of a circular arc. A large number of blocks 50 are disposed like a ring.

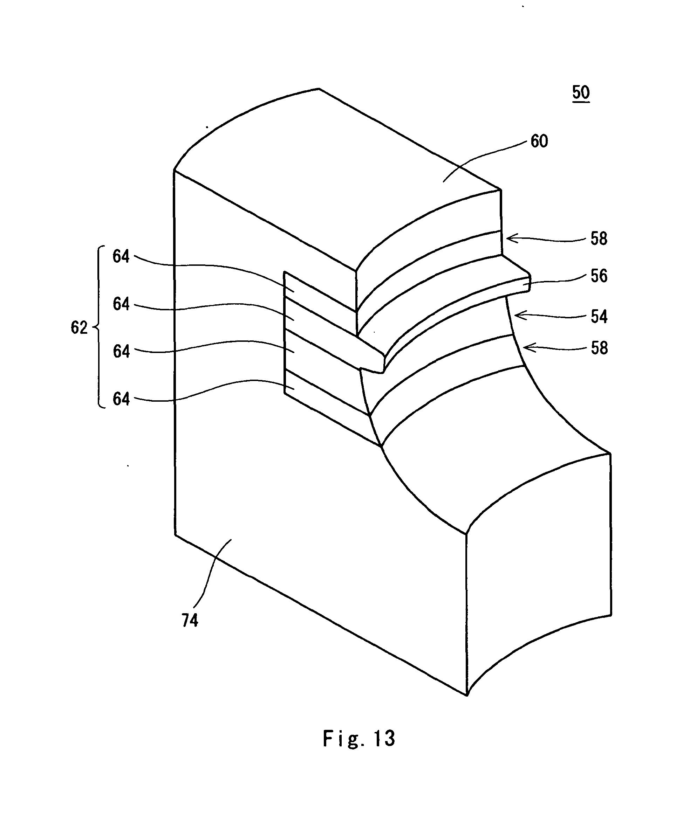

Fig. 13 is an enlarged perspective view showing the block 50 of the mold 46 in Fig. 12. The block 50 has a cavity surface 54. The cavity surface 54 has a protruded portion 56 and a recess portion 58. The protruded portion 56 corresponds to a groove of a tread of the tire. By the protruded portion 56 and the recess portion 58, a tread pattern is formed on the tire.

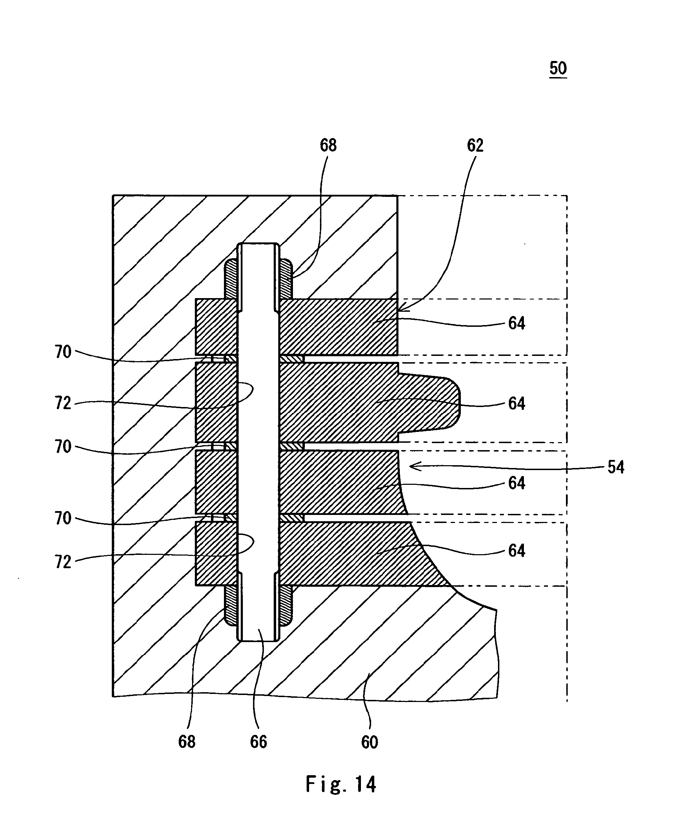

Fig. 14 is an enlarged sectional view showing a part of the block 50 in Fig. 13. The block 50 is constituted by a base 60 and a core 62. The base 60 surrounds the core 62. The base 60 is formed by a metallic material. A typical metallic material is an aluminum alloy. The core 62 is constituted by a piece 64, a bolt 66 (a bar member), a nut 68 and a shim 70. In the present embodiment, the core 62 has four pieces 64. The pieces 64 are arranged in an axial direction. The piece 64 has a hole 72. The bolt 66 is inserted through the hole 72. The nut 68 is screwed into the bolt 66. An end of the bolt 66 and the nut 68 are buried in the base 60. The shim 70 is interposed between two adjacent pieces 64. By the shim 70, a slit is formed between the two adjacent pieces 64. The slit is extended in radial and circumferential directions. The slit reaches the cavity surface 54.

In the fabrication of the block 50, the core 62 is inserted into a die. A molten metal is caused to flow into a surrounding part of the core 62. The molten metal coagulates in the die. By the coagulation, the base 60 is formed. By the coagulation, the core 62 is subjected to enveloped casting by the base 60. Thus, it is possible to obtain the block 50 having the base 60 and the core 62. By the enveloped casting, the core 62 is firmly fixed to the base 60. The block 50 is subjected to a cut processing so that the cavity surface 54 is formed. In Fig. 14, a contour of the piece 64 which has not been subjected to the cutting operation is shown in a two-dotted chain line.

Also in the mold 46, air present between the cavity surface 54 and a raw cover is moved to a divided surface 74 (see Fig. 13) through the slit and is thus discharged. By the discharge, a bare is prevented.

The mold according to the present invention is suitable for manufacturing various tires. The above description is only illustrative and various changes can be made without departing from the scope of the present invention.

## Claims

1. A mold (2, 46) for a tire comprising a block (12, 50) having an internal surface forming a cavity surface (14, 54),
wherein the block (12, 50) has a base (20, 60) and a core (22, 62),
the core (22, 62) includes a plurality of plate-shaped pieces (24, 64) which is arranged and a shim (30, 70) interposed between two adjacent pieces (24, 64), and
a slit is formed between the two adjacent pieces (24, 64) by the shim (30, 70),
**characterized in that**
the core (22, 62) ist firmly fixed to the base (20, 60) by enveloped casting.

2. The mold (2, 46) according to claim 1, wherein each piece (24, 64) has a hole (32) and a plurality of pieces (24, 64) is fastened by a bar member (26) penetrating through the hole (32).

3. The mold (2, 46) according to claim 2, wherein a coefficient of thermal expansion of the bar member (26, 66) is smaller than that of the piece(24, 64).

4. A method of manufacturing a tire comprising the steps of:
obtaining a raw cover (40) by preforming;
putting the raw cover (40) into a mold (2, 46) including a block having an internal surface forming a cavity surface (14, 54), the block (12, 50) having a base (20, 60) and a core (22, 62), the core (22, 62) having a plurality of plate-shaped pieces (24, 64) which is arranged and a shim (30, 70) interposed between two adjacent pieces (24, 64), and a slit being formed between the two adjacent pieces (24, 64) by the shim (30, 70); wherein the core (22, 62) ist firmly fixed to the base (20, 60) by enveloped casting; and
pressurizing and heating the raw cover (40) in the mold (2, 46).

5. A method of manufacturing a mold (2, 46) to be used in a method for manufacturing the tire according to claim 4 comprising the steps of:
inserting, into a die, a core (22, 62) including a plurality of plate-shaped pieces (24, 64) which is arranged and a shim (30, 70) interposed between two adjacent pieces (24, 64) and having a slit formed between the adjacent pieces (24, 64) by the shim (30, 70);
causing a molten metal to flow into the die;
forming a base (20, 60) by a coagulation of the molten metal and forming a block (12, 50) constituted by the base (20, 60) and the core (22, 62) subjected to enveloped casting by the base (20, 60); and
carrying out a cut processing over the block (12, 50), thereby forming a cavity surface (14, 54) to which the slit is exposed.

## Patentansprüche

1. Form (2, 46) für einen Reifen, die einen Block (12, 50) umfasst, der eine Innenfläche aufweist, die eine Hohlraumoberfläche (14, 54) bildet,
wobei der Block (12, 50) eine Basis (20, 60) und einen Kern (22, 62) aufweist,
der Kern (22, 62) eine Vielzahl von plattenförmigen Stücken (24, 64), welche zusammengestellt ist, und ein Distanzstück (30, 70), das zwischen zwei benachbarten Stücken (24, 64) eingefügt ist, umfasst und
durch das Distanzstück (30, 70) ein Schlitz zwischen den zwei benachbarten Stücken (24, 64) gebildet ist,
**dadurch gekennzeichnet, dass**
der Kern (22, 62) durch Vergießen fest an der Basis (20, 60) befestigt ist.

2. Form (2, 46) nach Anspruch 1,
wobei jedes Stück (24, 64) ein Loch (32) aufweist, und eine Vielzahl von Stücken (24, 64) durch ein Stabelement (26), das durch das Loch (32) hindurchtritt, befestigt ist.

3. Form (2, 46) nach Anspruch 2,
wobei ein Wärmeausdehnungskoeffizient des Stabelements (26, 66) kleiner als der des Stücks (24, 64) ist.

4. Verfahren zum Herstellen eines Reifens, das die Schritte umfasst:
Beschaffen einer Rohdecke (40) durch Vorformen;
Einsetzen der Rohdecke (40) in eine Form (2, 46), die einen Block mit einer Innenfläche aufweist, die eine Hohlraumoberfläche (14, 54) bildet, wobei der Block (12, 50) eine Basis (20, 60) und einen Kern (22, 62) aufweist, wobei der Kern (22, 62) eine Vielzahl von plattenförmigen Stücken (24, 64), die zusammengestellt ist, und ein Distanzstück (30, 70) aufweist, das zwischen zwei benachbarten Stücken (24, 64) eingefügt ist, und durch das Distanzstück (30, 70) ein Schlitz zwischen den zwei benachbarten Stücken (24, 64) gebildet ist; wobei der Kern (22, 62) durch Vergießen fest an der Basis (20, 60) befestigt ist; und
Unterdrucksetzen und Beheizen der Rohdecke (40) in der Form (2, 46).

5. Verfahren zum Herstellen einer Form (2, 46) zur Verwendung in einem Verfahren zum Herstellen des Reifens nach Anspruch 4, das die Schritte umfasst:
Einsetzen, in ein Werkzeug, eines Kerns (22, 62), der eine Vielzahl von plattenförmigen Stücken (24, 64), die zusammengestellt ist, und ein Distanzstück (30, 70), das zwischen zwei benachbarten Stücken (24, 64) eingefügt ist, umfasst und einen Schlitz aufweist, der durch das Distanzstück (30, 70) zwischen den benachbarten Stücken (24, 64) gebildet ist;
Bewirken, dass eine Metallschmelze in das Werkzeug fließt;
Bilden einer Basis (20, 60) durch eine Koagulation der Metallschmelze und Bilden eines Blocks (12, 50), der durch die Basis (20, 60) und den Kern (22, 62) erzeugt wird, welcher einem Vergießen mit der Basis (20, 60) ausgesetzt wird; und
Ausführen einer Schneideverarbeitung über den Block (12, 50), wodurch eine Hohlraumoberfläche (14, 54) gebildet wird, zu der hin der Schlitz freigelegt ist.

## Revendications

1. Moule (2, 46) pour un pneu comprenant un bloc (12, 50) ayant une surface interne formant une surface de cavité (14, 54),
dans lequel le bloc (12, 50) a une base (20, 60) et un noyau (22, 62),
le noyau (22, 62) comprend une pluralité de pièces en forme de plaque (24, 64) qui est agencée et une cale (30, 70) intercalée entre deux pièces (24, 64) adjacentes, et
une fente est formée entre les deux pièces (24, 64) adjacentes par la cale (30, 70),
**caractérisé en ce que** :
le noyau (22, 62) est fermement fixé à la base (20, 60) par scellement enveloppé.

2. Moule (2, 46) selon la revendication 1, dans lequel chaque pièce (24, 64) a un trou (32) et une pluralité de pièces (24, 64) est fixée par un élément de barre (26) pénétrant à travers le trou (32).

3. Moule (2, 46) selon la revendication 2, dans lequel un coefficient de dilatation thermique de l'élément de barre (26, 66) est inférieur à celui de la pièce (24, 64).

4. Procédé pour fabriquer un pneu comprenant les étapes consistant à :
obtenir un couvercle brut (40) par préformage ;
placer le couvercle brut (40) dans un moule (2, 46) comprenant un bloc ayant une surface interne formant une surface de cavité (14, 54), le bloc (12, 50) ayant une base (20, 60) et un noyau (22, 62), le noyau (22, 62) ayant une pluralité de pièces en forme de plaque (24, 64) qui est agencée et une cale (30, 70) intercalée entre deux pièces (24, 64) adjacentes, et une fente étant formée entre les deux pièces (24, 64) adjacentes par la cale (30, 70) ; dans lequel le noyau (22, 62) est fermement fixé à la base (20, 60) par scellement enveloppé ; et
mettre sous pression et chauffer le couvercle brut (40) dans le moule (2, 46).

5. Procédé pour fabriquer un moule (2, 46) destiné à être utilisé dans un procédé pour fabriquer le pneu selon la revendication 4, comprenant les étapes consistant à :
insérer, dans un moule, un noyau (22, 62) comprenant une pluralité de pièces en forme de plaque (24, 64) qui est agencée et une cale (30, 70) intercalée entre deux pièces (24, 64) adjacentes et ayant une fente formée entre les pièces (24, 64) adjacentes par la cale (30, 70) ;
amener un métal en fusion à s'écouler dans le moule ;
former une base (20, 60) par une coagulation du métal en fusion et former un bloc (12, 50) constitué par la base (20, 60) et le noyau (22, 62) soumis au scellement enveloppé par la base (20, 60) ; et
réaliser un processus de découpe sur le bloc (12, 50) formant ainsi une surface de cavité (14, 54) à laquelle la fente est exposée.
